**Europäisches Patentamt**

**European Patent Office**

**Office européen des brevets**

(11) Numéro de publication : **0 493 255 B1**

(12) **FASCICULE DE BREVET EUROPEEN**

(45) Date de publication du fascicule du brevet :
**31.05.95 Bulletin 95/22**

(21) Numéro de dépôt : **91403539.9**

(22) Date de dépôt : **26.12.91**

(51) Int. Cl.⁶ : **H01Q 3/46,** H01Q 15/00,
G01S 7/38, F41H 3/00

(54) **Système de protection d'un équipement électronique.**

(30) Priorité : **27.12.90 FR 9016333**

(43) Date de publication de la demande :
**01.07.92 Bulletin 92/27**

(45) Mention de la délivrance du brevet :
**31.05.95 Bulletin 95/22**

(84) Etats contractants désignés :
**DE GB**

(56) Documents cités :
**EP-A- 0 000 308**
**DE-A- 3 642 072**
**DE-A- 3 744 511**
**FR-A- 2 063 967**
**FR-A- 2 395 620**
**US-A- 3 708 796**

(73) Titulaire : **THOMSON-CSF RADANT**
**Avenue de l'Atlantique**
**F-91942 Les Ulis Cédex (FR)**

(72) Inventeur : **Dorey, Jacques**
**THOMSON-CSF,**
**SCPI**
**B.P.329**
**50, rue J.-P.Timbaud**
**F-92402 Courbevoie Cédex (FR)**
Inventeur : **Chekroun, Claude**
**THOMSON-CSF,**
**SCPI**
**B.P.329**
**50, rue J.-P.Timbaud**
**F-92402 Courbevoie Cédex (FR)**

(74) Mandataire : **Benoit, Monique et al**
**THOMSON-CSF**
**SCPI**
**B.P. 329**
**50, rue Jean-Pierre Timbaud**
**F-92402 Courbevoie Cédex (FR)**

# Description

La présente invention a pour objet un système de protection contre une détection radar d'un équipement électronique actif ou passif, c'est-à-dire un équipement émettant ou recevant un rayonnement électromagnétique hyperfréquence, un émetteur ou un récepteur radar ou un émetteur ou un récepteur de télécommunication par exemple.

Les équipements tels que ceux qui comportent des antennes réfléchissent beaucoup les ondes hyperfréquences et, par suite, sont très aisément détectables par un radar. On connaît différents dispositifs permettant d'absorber plus ou moins une onde hyperfréquence incidente ou, plus généralement, de masquer une cible potentielle au regard d'un faisceau radar. Toutefois, de tels dispositifs, dont l'efficacité est souvent limitée, ne peuvent en général pas être utilisés pour la protection d'équipements électroniques, dont ils perturbent tant l'émission que la réception.

La présente invention a pour objet un système qui assure la protection d'un équipement électronique sans perturber son fonctionnement.

A cet effet, la surface émissive et/ou réceptrice de l'équipement est recouverte d'un dispositif susceptible d'imprimer, sur commande, un déphasage donné, par exemple sensiblement de $\P/2$, permettant de moduler en phase une onde hyperfréquence éclairant l'équipement ; l'onde réfléchie par l'équipement voit ainsi son spectre de fréquence modifié et étalé, rendant la détection de l'équipement plus difficile. Pour ne pas perturber le fonctionnement de l'équipement à protéger, une modulation inverse est appliquée au signal émis et/ou reçu par l'équipement concerné.

Plus précisément, l'invention a pour objet un système de protection selon la revendication 1.

D'autres objets, particularités et résultats de l'invention ressortiront de la description suivante, illustrée par les dessins annexés qui représentent :
- la figure 1, un schéma de principe du dispositif selon l'invention ;
- les figures 2a, 2b et 2c, , des chronogrammes illustrant un premier mode de fonctionnement du dispositif selon l'invention ;
- les figures 3a, 3b et 3c, des chronogrammes illustrant un deuxième mode de fonctionnement du dispositif selon l'invention ;
- les figures 4 et 5, un mode de réalisation de moyens déphaseurs utilisés dans le dispositif selon l'invention.

Sur ces différentes figures, les mêmes références se rapportent aux mêmes éléments.

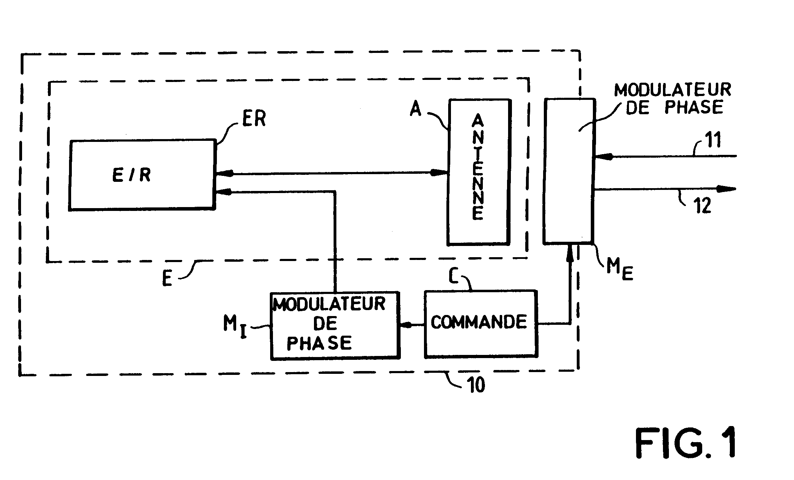

La figure 1 est un schéma de principe du dispositif selon l'invention.

Sur cette figure, on a illustré un équipement électronique à protéger E, par exemple sous la forme d'un premier ensemble ER, émetteur et récepteur, relié à une antenne A pour l'émission et la réception d'un rayonnement électromagnétique hyperfréquence sous la commande de l'ensemble ER. L'équipement E peut être par exemple un radar.

Selon l'invention, la surface émissive et/ou réceptrice de l'équipement E, à savoir au moins la surface de l'antenne A, est recouverte de moyens $M_E$ formant modulateur de phase et permettant, sur commande de moyens de commande C, d'imprimer un déphasage sensiblement de $\P/2$ à une onde hyperfréquence incidente 11. L'onde incidente 11 peut émaner par exemple d'un radar extérieur, cherchant à détecter l'engin portant l'équipement E. Ainsi qu'il est connu, une partie de cette onde 11 est réfléchie par l'antenne A ; elle retraverse alors le modulateur $M_E$ pour y subir un nouveau déphasage de $\P/2$ et former l'onde réfléchie 12 ; l'onde 12 est donc déphasée de $\P$ par rapport à l'onde incidente 11. De la sorte, sur commande du modulateur $M_E$, on peut imprimer une modulation de phase 0-$\P$ à une onde radar extérieure et, ce, à une fréquence f quelconque ou, plus généralement, selon une loi quelconque, qui n'est limitée en pratique que par la rapidité de commutation du modulateur $M_E$. Il est à noter, pour être complet, que la fréquence de modulation f du modulateur $M_E$ doit rester suffisamment basse pour que l'onde 11 voit le même état de phase du modulateur $M_E$ à l'aller et au retour (après réflexion), ce qui n'est pas une limite contraignante en pratique. A titre d'exemple, la fréquence f peut être de l'ordre de quelques mégahertz.

Par ailleurs, l'énergie hyperfréquence émise ou reçue par l'équipement E lui-même se voyant également modulée en phase par le dispositif $M_E$, on prévoit selon l'invention un second modulateur de phase $M_I$, commandé en synchronisme avec le modulateur $M_E$ par les moyens C. Le modulateur $M_I$ est destiné à compenser la modulation due au dispositif $M_E$, c'est-à-dire à appliquer au signal émis ou reçu par l'ensemble ER une modulation de phase identique mais de signe contraire à la modulation de phase appliquée par le modulateur $M_E$ sur l'onde hyperfréquence issue de l'antenne A, ou reçue par elle. Le modulateur $M_1$ est réalisable par tout moyen connu. A titre d'exemple, la modulation de phase peut être réalisée en sortie d'un oscillateur local généralement contenu dans ce type d'équipement, dont le signal est destiné à être mélangé au signal émis ou reçu par l'équipement.

Dans une variante de réalisation, illustrée par un trait pointillé 10 sur la figure 1, le modulateur de phase $M_E$ peut entourer la totalité de l'équipement E à protéger.

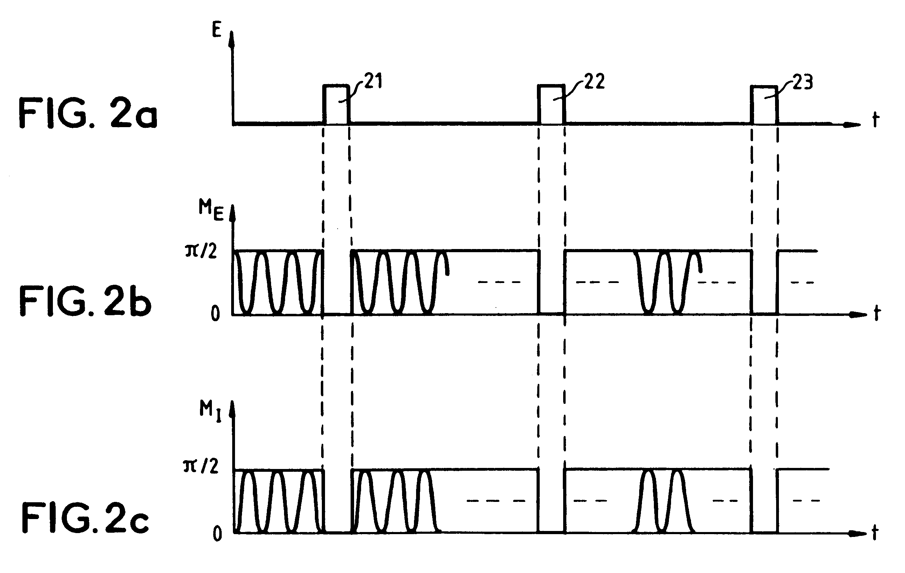

Les figures 2a et 2b sont des chronogrammes illustrant un premier mode de fonctionnement du dispositif selon l'invention.

La figure 2a représente un exemple de signal susceptible d'être fourni par l'ensemble ER de la figure 1 pour émission d'une onde par l'antenne A. Il s'agit par exemple d'une suite d'impulsions, repérées 21, 22 et 23, équidistantes dans le temps, modulant un signal hyperfréquence, non représenté pour simplifier le schéma.

La figure 2b illustre la loi de modulation appliquée à une onde traversant le modulateur $M_E$, que ce soit une onde se propageant dans le sens réception vers l'antenne A ou dans le sens émission par l'antenne A ou encore réflexion d'une onde incidente sur l'antenne A. Il s'agit d'une modulation de phase variant de façon périodique entre les valeurs 0 et $\P/2$, par exemple de façon sinusoïdale avec une fréquence f. Cette modulation est appliquée en permanence sauf pendant les instants correspondants à l'émission des impulsions 21, 22 et 23 par l'équipement à protéger.

La figure 2c représente la loi de modulation appliquée par le modulateur de phase $M_I$ au signal transmis de l'antenne A vers l'ensemble ER ou réciproquement. Il s'agit d'une modulation périodique de même fréquence f entre les valeurs 0 et $\P/2$ mais inverse de la précédente, c'est-à-dire déphasée de $\P$ par rapport à celle-ci ; comme pour le modulateur $M_E$, cette modulation est permanente sauf pendant le temps d'émission des impulsions 21, 22 et 23.

Le fonctionnement du système est alors le suivant :

- Lorsque l'équipement E émet une impulsion (21...23), celle-ci passe à travers le modulateur $M_E$ sans que celui-ci ne lui impose une quelconque modulation.
- L'onde hyperfréquence reçue par l'équipement entre les impulsions 21-23, par exemple en réponse aux impulsions qu'il a lui-même émises, subissent une modulation de phase 0-$\P/2$ de la part du modulateur $M_E$ comme indiqué sur la figure 2b. Cette modulation est compensée par la modulation inverse appliquée par le modulateur $M_I$ au signal à destination de l'ensemble ER, comme illustré sur la figure 2c. De la sorte, le signal reçu par l'équipement E en réponse à ses émissions n'est perturbé ni à l'émission, ni à la réception.
- En ce qui concerne les ondes hyperfréquences qui n'intéressent pas le fonctionnement de l'équipement E, le modulateur $M_E$ leur impose, en dehors des instants d'émission (impulsions 21. .. 23 ), une modulation de phase 0-$\P/2$ ; la partie de cette énergie incidente qui est réfléchie par l'antenne A retraverse le modulateur $M_E$ y subissant un deuxième déphasage, l'onde 12 réfléchie par le système présentant alors une modulation de phase 0-$\P$.

Une telle modulation a différents effets sur le radar extérieur qui a émis une onde telle que 11-12 : tout d'abord, elle étale le spectre de l'onde réfléchie par rapport à celui de l'onde incidente ; le radar extérieur ayant émis l'onde à une fréquence $F_0$ ne travaille que dans une bande relativement étroite autour de cette fréquence ; il apparaît que l'énergie qu'il recevra dans cette bande sera sensiblement réduite par rapport à l'énergie qu'il aurait reçu en l'absence de modulation. En outre, si la fréquence de modulation (f) est choisie suffisamment grande, les maxima dus à la modulation de phase pourront être en dehors de la bande du radar ; dans ce cas, le signal résiduel reçu par le radar à la fréquence $F_0$, trop faible, peut se trouver assimilé à du bruit et ne pas être détecté. Il apparaît encore que cette modulation à la fréquence f inconnue du radar ayant émis l'onde de fréquence $F_0$, décaractérise complètement la réponse de l'équipement E et de l'engin qui le porte, ce qui diminue encore la probabilité de détection de cette dernière par un radar, sans qu'une augmentation de puissance du radar puisse compenser ce mécanisme.

On a envisagé ci-dessus une variation périodique (sinusoïdale par exemple ), de fréquence f, du courant de commande des diodes. D'autres types de variation peuvent être bien entendu utilisés, tels qu'une commande des diodes par des codes aléatoires, accentuant encore la décaractérisation de la réponse.

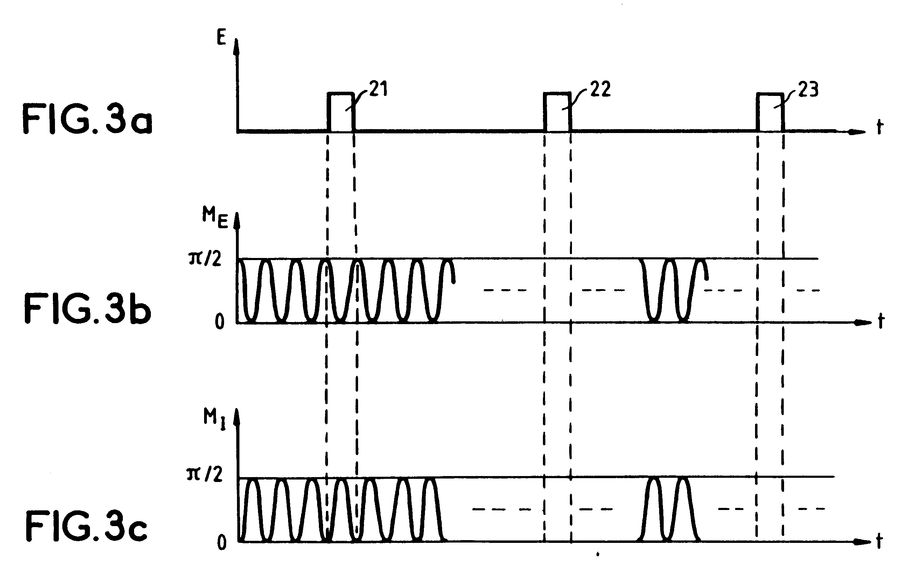

Les figures 3a, 3b et 3c sont des chronogrammes analogues à ceux des figures 2a... 2c, illustrant un deuxième mode de fonctionnement du dispositif selon l'invention.

La figure 3a est identique à la figure 2a et illustre les instants d'émission de l'équipement E.

La figure 3b illustre la modulation de phase que fait subir le modulateur $M_E$ à une onde hyperfréquence qui le traverse. Comme précédemment et à titre d'exemple, la loi de modulation est périodique, par exemple sinusoïdale, et varie de 0 à $\P/2$ avec une fréquence f.

Cependant, contrairement au cas précédent, cette loi est continue, c'est-à-dire que la modulation est effective également pendant les instants d'émission 21-23.

La figure 3c représente la loi de modulation du modulateur $M_I$.

Comme précédemment, cette loi de modulation est l'inverse de celle du modulateur $M_E$, c'est-à-dire ici loi de modulation périodique variant de 0 à $\P/2$ avec une fréquence f et, ce, de façon continue.

Le fonctionnement du système est alors le suivant :

- En ce qui concerne les émissions (21-23) de l'équipement E, le signal fourni par l'ensemble ER est pré-modulé par le modulateur $M_I$, modulation qui est compensée par la modulation inverse appliquée par le modulateur $M_E$ à l'onde émise par l'antenne A.
- En ce qui concerne la réception de signaux par l'équipement E, le fonctionnement est identique à ce qui a été décrit figure 2 : l'onde subit une modulation avant réception par l'antenne A (modulateur $M_E$), qui est compensée après l'antenne par le modulateur $M_I$. De la sorte, comme précédemment, le signal reçu par l'équipement E n'est perturbé ni à l'émission, ni à la réception.

- En ce qui concerne les ondes qui n'intéressent pas le fonctionnement de l'équipement E, le fonctionnement est le même que celui de la figure 2, à ceci près qu'il est efficace à tout instant.

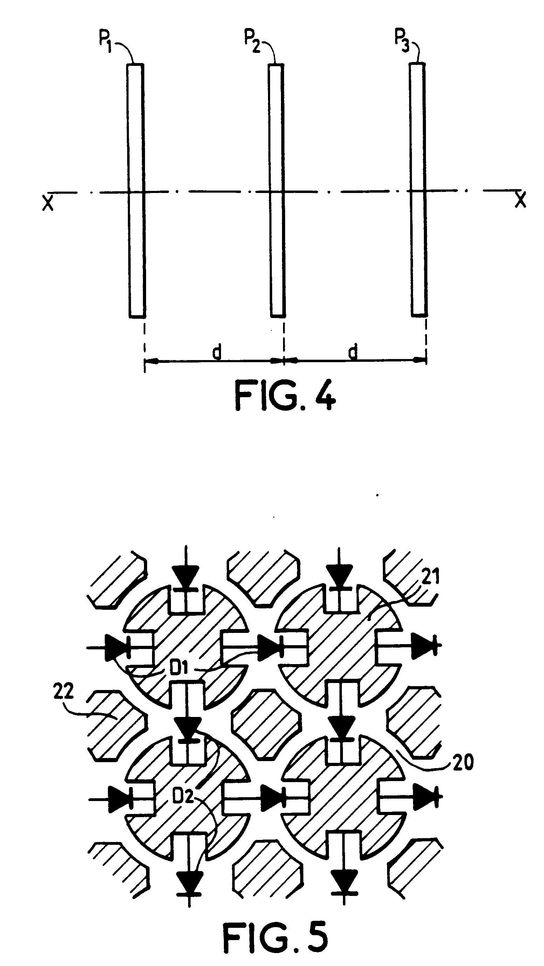

La figure 4 représente un mode de réalisation du modulateur de phase $M_E$ utilisé dans le dispositif selon l'invention.

Les brevets français 69.35239 et 77.19365 décrivent des panneaux diélectriques portant des éléments commutables (diodes) et permettant de déphaser une onde hyperfréquence sur commande.

Le modulateur de la figure 4 appartient à cette famille de dispositifs. Il se compose de trois panneaux $P_1$, $P_2$ et $P_3$, disposés sensiblement parallèlement les uns aux autres sur un axe XX qui est par exemple l'axe de l'antenne A (figure 1). Ces panneaux sont distants l'un de l'autre d'une distance d.

La figure 5 est une vue fractionnaire d'un mode de réalisation pratique d'un des panneaux $P_1$... $P_3$.

Ce panneau est formé par un substrat électriquement isolant 20, portant un ensemble d'éléments semi-conducteurs ; dans ce mode de réalisation, le substrat porte deux réseaux de diodes. Le premier réseau est constitué de diodes, repérées $D_1$, toutes connectées dans le même sens et formant un ensemble de lignes parallèles les unes aux autres. Le deuxième réseau est également formé de diodes, repérées $D_2$, toutes connectées dans le même sens et formant des colonnes, sensiblement perpendiculaires aux lignes précédentes. A l'interconnexion des lignes et des colonnes sont disposées des pastilles conductrices 21, par exemple en forme de disques. Le pas des lignes peut être avantageusement le même que le pas des colonnes et être de l'ordre de $\lambda/2$ , où $\lambda$ est la longueur d'onde moyenne de la bande de fonctionnement du modulateur ; le pas des diodes $D_1$ ou $D_2$ est constant à l'intérieur des lignes ou des colonnes et peut également avantageusement être le même et égal au pas des lignes et colonnes, de sorte à former une maille carrée. Pour la clarté du dessin, les disques 21 sont hachurés, bien que non vus en coupe. Des fils conducteurs (non représentés), disposés en bordure du panneau et interconnectant les disques 21 assurent la polarisation des diodes $D_1$ et $D_2$.

Les disques 21 ont pour fonction de réaliser l'adaptation d'impédance du panneau. Il est à noter qu'ils sont représentés sous forme de disques circulaires comportant des encoches pour la connexion des diodes mais qu'ils peuvent avoir des formes différentes (anneau, croix, surface présentant des découpages, etc... ), une telle forme étant déterminée expérimentalement en vue d'améliorer l'adaptation d'impédance du panneau. Dans ce mode de réalisation, l'adaptation est complétée par des motifs conducteurs 22, disposés entre les disques 21.

Dans une variante de réalisation, les deux réseaux de diodes sont réalisés chacun sur une face du substrat 20, les diodes $D_1$ n'étant alors plus reliées aux diodes $D_2$ mais étant commandées en synchronisme. Cette réalisation peut simplifier les problèmes technologiques d'alimentation des diodes.

Le fonctionnement d'un tel ensemble de trois panneaux varie selon que l'onde qui les traverse se situe dans sa bande de fréquence de fonctionnement, qui doit être sensiblement celle de l'équipement E, ou hors de cette bande.

A l'intérieur de cette bande, le modulateur est prévu pour être adapté, donc ne pas imposer de réflexions à l'onde qui le traverse, notamment aux ondes à destination ou en provenance de l'équipement E. Le modulateur présente alors deux modes de fonctionnement, selon l'état des diodes, entre lesquels il existe un déphasage voisin de 90° :

- dans un premier état, les diodes de l'ensemble des trois panneaux sont conductrices, c'est-à-dire polarisées en direct par un courant important (proche de la saturation) ;
- dans un deuxième état, les diodes ne sont pas conductrices, c'est-à-dire bloquées par une polarisation inverse.

Les caractéristiques géométriques et électriques des panneaux (pas des lignes et colonnes, pas des diodes, formes et dimensions des pastilles et des motifs, caractéristiques électriques des diodes... ) sont déterminées pour que, à la longueur d'onde moyenne de la bande de fonctionnement :

- dans l'un des états des diodes (bloquées par exemple ), si le panneau $P_1$ a une susceptance B, le panneau $P_3$ ait la même susceptance B et le panneau $P_2$, une susceptance double (2B) ;
- dans l'autre état des diodes (conductrices), les susceptances soient nulles.

La valeur de la susceptance B est déterminée par la valeur $\varnothing_o$ du déphasage différentiel qu'on souhaite obtenir entre les deux états ci-dessus, à l'aide de la formule suivante :

$$B = 2 \operatorname{tg} [\varnothing_o \cdot \frac{1}{n+1}]$$

où n est le nombre de panneaux.

La distance (d) entre panneaux est donnée par l'expression suivante :

$$d = \frac{\lambda}{2\pi} \cdot \operatorname{Arctg} \frac{2}{B}$$

Toutefois, le calcul et l'expérience montrent que le fonctionnement du dispositif reste satisfaisant dans une très large plage autour de la valeur donnée ci-dessus. A titre d'exemple, une valeur de d différant d'un facteur 2 de l'expression ci-dessus est encore acceptable.

En utilisant au moins trois panneaux sensiblement équidistants $P_1$, $P_2$, $P_3$ dont les susceptances sont respectivement B, 2B et B, on peut donc obtenir un dispositif adapté dans deux états, entre lesquels il existe un déphasage différentiel $\varnothing_o$ dont le choix de la valeur fixe celle de B et, par suite, la configuration de chaque panneau. A titre d'exemple, on obtient une valeur de $\varnothing_o$ égale à 90° pour une valeur de B voisine de 0, 8.

Dans une variante de réalisation, les trois panneaux $P_1 ... P_3$ peuvent être noyés dans un matériau diélectrique, tel que de la mousse, ayant notamment une fonction de support mécanique. Dans ce cas, l'expression de la distance d est, ainsi qu'il est connu, à corriger d'un facteur $\sqrt{\varepsilon}$, $\varepsilon$ étant la constante diélectrique du matériau.

Le modulateur $M_E$ peut utiliser plus de trois panneaux, sous réserve de respecter la séquence suivante pour les susceptances des panneaux : un premier et un dernier panneaux de susceptance B chacun, séparés par n-2 panneaux de susceptance 2B ; l'effet de la multiplication des panneaux est l'augmentation de la bande passante de modulateur.

Il est à noter que l'adaptation décrite ci-dessus n'est strictement obtenue que pour une onde se propageant selon l'axe XX. Toutefois, la distance et la susceptance varient avec l'incidence et les effets de ces variations tendent à se compenser, de sorte que le comportement du modulateur reste satisfaisant ; à titre d'exemple, on a obtenu, avec les valeurs précédentes, un Taux d'Onde Stationnaire (TOS) inférieur à 1,4 pour une onde incidente comprise dans un cône de 120° d'angle au sommet.

Hors de la bande passante du modulateur, celui-ci devient réfléchissant pour l'un de ses états (état conducteur pour les fréquences basses ou état bloqué pour les fréquences hautes) et reste adapté pour l'autre de ses états. Le résultat en est qu'une onde hyperfréquence incidente est réfléchie, selon l'état du modulateur, soit par le premier panneau du modulateur, soit (partiellement) par l'antenne de l'équipement, avec un déphasage différentiel entre ces deux situations dû notamment à la différence entre les distances parcourues par l'onde dans les deux cas. On obtient donc, ici également, une modulation de phase à la fréquence de commutation des deux états du modulateur. Expérimentalement, on a obtenu des valeurs de déphasage qui ne sont plus de l'ordre de 180° mais qui atteignent encore 120°

La description faite ci-dessus l'a été bien entendu à titre d'exemple non limitatif. C'est ainsi notamment que le déphasage différentiel imposé par le modulateur $M_E$ n'est pas obligatoirement de $\pi/2$ mais peut avoir une valeur plus faible. Expérimentalement, on constate que l'atténuation et la décaractérisation de la réponse de l'équipement à un faisceau radar extérieur peut être considérée comme satisfaisante jusque pour des déphasages $\varnothing_o$ de l'ordre de 50°. C'est ainsi également qu'on a décrit un modulateur $M_E$ disposé devant l'équipement E, mais qu'on peut disposer en outre une pluralité de modulateurs tels que $M_E$,

à côté de ce dernier et commandés indépendamment de lui ; en appliquant à ces différents modulateurs soit la même loi de modulation, décalée dans le temps, soit des lois différentes, on obtient en outre une déflexion ou, plus généralement, une dispersion spatiale de l'onde réfléchie.

**Revendications**

1. Système de protection d'un équipement électronique, l'équipement comportant une surface (A) susceptible d'émettre ou de recevoir une onde hyperfréquence et des moyens d'émission et/ou de réception (ER), reliés à ladite surface ; le système étant caractérisé par le fait qu'il comporte :
   - des premiers moyens ($M_E$) de modulation de phase, disposés devant ladite surface (A) et susceptibles d'imprimer, sur commande, un déphasage ($\varnothing_o$) donné à une onde qui les traverse ;
   - des deuxièmes moyens ($M_I$) de modulation de phase, susceptibles d'imprimer, sur commande, un déphasage inverse de celui imprimé par les premiers moyens, aux signaux échangés par ladite surface et les moyens d'émission et/ou de réception.

2. Système selon la revendication 1, caractérisé par le fait que le déphasage ($\varnothing_o$) imprimé par les premiers moyens est sensiblement de $\pi/2$.

3. Système selon l'une des revendications précédentes, caractérisé par le fait que les premiers moyens impriment un déphasage à l'onde et les deuxième moyens, un déphasage aux signaux, en dehors des instants d'émission de l'équipement.

4. Système selon l'une des revendications 1 ou 2, caractérisé par le fait que les premiers moyens impriment un déphasage à l'onde et les deuxième moyens, un déphasage aux signaux, aussi bien pendant les instants d'émission que les instants de réception de l'équipement.

5. Système selon l'une des revendications précédentes, caractérisé par le fait que les premiers moyens comportent un ensemble de n panneaux, sensiblement parallèles entre eux et sensiblement équidistants, chacun des panneaux comportant au moins un réseau d'éléments semi-conducteurs ($D_1$) disposés selon une pluralité de lignes, susceptibles de présenter deux états, conducteur ou non conducteur, les caractéristiques électriques et géométriques des panneaux étant telles que, dans l'un des états des éléments semi-conducteurs, si le premier des panneaux présente une susceptance égale à B, les suivants présentent chacun une susceptance égale à 2B et le dernier, une susceptance égale à B.

6. Système selon la revendication 5, caractérisé par le fait que chacun des panneaux présente une susceptance nulle dans l'autre des états des éléments semi-conducteurs.

7. Système selon la revendication 5, caractérisé par le fait que la susceptance B du premier panneau est donnée par l'expression

$$B = 2 \, tg \left[ \varnothing_o \cdot \frac{1}{n+1} \right]$$

où $\varnothing_o$ est ledit déphasage donné.

8. Système selon l'une des revendications 5 à 7, caractérisé par le fait que chacun des panneaux comporte un deuxième réseau d'éléments semi-conducteurs ($D_2$), disposés selon une pluralité de colonnes sensiblement normales aux lignes du premier réseau.

9. Système selon l'une des revendications 5 à 8, caractérisé par le fait que le nombre n est égal à 3.

10. Système selon la revendication 9, caractérisé par le fait que la susceptance B est sensiblement égale à 0, 8.

11. Système selon l'une des revendications 5 à 10, caractérisé par le fait que les éléments semi-conducteurs sont des diodes.

12. Système selon l'une des revendications précédentes, caractérisé par le fait que les premiers moyens entourent l'ensemble de l'équipement.

13. Système selon l'une des revendications précédentes, caractérisé par le fait qu'il comporte en outre un ou plusieurs moyens de modulation de phase analogues aux premiers moyens, disposés au voisinage de ces derniers et commandés indépendamment, assurant une dispersion spatiale d'une onde incidente.

**Patentansprüche**

1. System zum Schutz eines elektronischen Geräts, das eine Fläche (A), die eine Mikrowelle aussenden oder empfangen kann, und Sende- und/oder Empfangsmittel (ER) besitzt, die mit dieser Fläche verbunden sind, dadurch gekennzeichnet, daß es aufweist:
   - erste Phasenmodulationsmittel ($M_E$), die vor dieser Fläche (A) liegen und eine diese Mittel durchquerende Welle aufgrund einer Steuerung einer Phasenverschiebung ($\varnothing_0$) unterwerfen können,
   - zweite Phasenmodulationsmittel ($M_I$), die aufgrund einer Steuerung die zwischen dieser Fläche und den Sende- und/oder Empfangsmitteln ausgetauschten Signale einer umgekehrten Phasenverschiebung zu der der ersten Mittel unterwerfen können.

2. System nach Anspruch 1, dadurch gekennzeichnet, daß die von den ersten Mitteln erzeugte Phasenverschiebung ($\varnothing_0$) im wesentlichen den Wert $\pi/2$ besitzt.

3. System nach einem der vorhergehenden Ansprüche, dadurch gekennzeichnet, daß die ersten Mittel die Welle einer Phasenverschiebung und die zweiten Mittel die Signale einer Phasenverschiebung nur außerhalb der Sendezeitpunkte des Geräts unterwerfen.

4. System nach einem der Ansprüche 1 oder 2, dadurch gekennzeichnet, daß die ersten Mittel die Welle und die zweiten Mittel die Signale sowohl während der Sendezeitpunkte als auch während der Empfangszeitpunkte des Geräts einer Phasenverschiebung unterwerfen.

5. System nach einem der vorhergehenden Ansprüche, dadurch gekennzeichnet, daß die ersten Mittel eine Gruppe von n im wesentlichen zueinander parallelen und äquidistanten Tafeln besitzen, wobei jede Tafel mindestens ein Netz von in mehreren Zeilen angeordneten Halbleiterelementen ($D_1$) besitzt, die zwei Schaltzustände, nämlich einen leitenden oder einen nichtleitenden Zustand, einnehmen können, wobei die elektrischen und geometrischen Kennwerte der Tafeln so gewählt sind, daß in einem der Schaltzustände der Halbleiterelemente, wenn die erste Tafel eine Suszeptanz gleich B hat, die nächstfolgenden Tafeln je eine Suszeptanz von 2B und die letzte eine Suszeptanz von B besitzen.

6. System nach Anspruch 5, dadurch gekennzeichnet, daß jede der Tafeln im anderen Schaltzustand der Halbleiterelemente eine Suszeptanz Nul aufweist.

7. System nach Anspruch 5, dadurch gekennzeichnet, daß die Suszeptanz B der ersten Tafel durch den folgenden Ausdruck gegeben ist

$$B = 2 \, tg \left[ \varnothing_o \cdot \frac{1}{n+1} \right]$$

wobei $\varnothing_0$ die gegebene Phasenverschiebung ist.

8. System nach einem der Ansprüche 5 bis 7, dadurch gekennzeichnet, daß jede der Tafeln ein zweites Netz von Halbleiterelementen (D$_2$) besitzt, die gemäß mehreren im wesentlichen senkrecht zu den Zeilen des ersten Netzes verlaufenden Spalten angeordnet sind.

9. System nach einem der Ansprüche 5 bis 8, dadurch gekennzeichnet, daß die Zahl n den Wert 3 besitzt.

10. System nach Anspruch 9, dadurch gekennzeichnet, daß die Suszeptanz B im wesentlichen den Wert 0,8 besitzt.

11. System nach einem der Ansprüche 5 bis 10, dadurch gekennzeichnet, daß die Halbleiterelemente Dioden sind.

12. System nach einem der vorhergehenden Ansprüche, dadurch gekennzeichnet, daß die ersten Mittel das ganze Gerät umgeben.

13. System nach einem der vorhergehenden Ansprüche, dadurch gekennzeichnet, daß es außerdem mindestens ein Phasenmodulationsmittel ähnlich den ersten Mitteln aufweist, das sich neben diesen letztgenannten Mitteln befindet und unabhängig davon gesteuert wird, so daß sich eine räumliche Streuung der eintreffenden Welle ergibt.

**Claims**

1. System for protecting electronic equipment, the equipment including a surface (A) capable of transmitting or of receiving a UHF wave and transmitting and/or receiving means (ER), linked to the said surface; the system being characterized in that it includes:
   - first phase modulation means (M$_E$) arranged in front of the said surface (A) and capable, under control, of imparting a given phase shift ($\varnothing_o$) to a wave which passes through them;
   - second phase modulation means (M$_I$) capable, under control, of imparting a phase shift which is the inverse of that imparted by the first means, to the signals exchanged by the said surface and the transmitting and/or receiving means.

2. System according to Claim 1, characterized in that the phase shift ($\varnothing_o$) imparted by the first means is substantially $\pi/2$.

3. System according to one of the preceding claims, characterized in that the first means impart a phase shift to the wave and the second means impart a phase shift to the signals, outside of the instants of transmission by the equipment.

4. System according to one of Claims 1 or 2, characterized in that the first means impart a phase shift to the wave and the second means impart a phase shift to the signals, both during the instants of transmission and the instants of reception by the equipment.

5. System according to one of the preceding claims, characterized in that the first means include a set of n panels, substantially parallel to each other and substantially equidistant, each of the panels including at least one array of semiconductor elements (D$_1$) arranged in a plurality of rows, capable of exhibiting two states, conducting or non-conducting, the electrical and geometric characteristics of the panels being such that, in one of the states of the semiconductor elements, if the first of the panels exhibits a susceptance equal to B, the following ones each exhibit a susceptance equal to 2B, and the last a susceptance equal to B.

6. System according to Claim 5, characterized in that each of the panels exhibits zero susceptance in the other of the states of the semiconductor elements.

7. System according to Claim 5, characterized in that the susceptance B of the first panel is given by the expression

$$B = 2 \, tg \, [\varnothing_o \cdot \frac{1}{n+1}]$$

where $\varnothing_o$ is the said given phase shift.

8. System according to one of Claims 5 to 7, characterized in that each of the panels includes a second array of semiconductor elements (D$_2$), arranged in a plurality of columns substantially normal to the rows of the first array.

9. System according to one of Claims 5 to 8, characterized in that the number n is equal to 3.

10. System according to Claim 9, characterized in that the susceptance B is substantially equal to 0.8.

11. System according to one of Claims 5 to 10, characterized in that the semiconductor elements are diodes.

12. System according to one of the preceding claims, characterized in that the first means surround the whole of the equipment.

13. System according to one of the preceding claims, characterized in that it further includes one or more phase modulation means, similar to the first means, arranged in the vicinity of the latter and controlled independently, providing spatial dispersion of an incident wave.

FIG. 1

FIG. 2a

FIG. 2b

FIG. 2c

EP 0 493 255 B1

FIG.3a

E

21    22    23

t

FIG.3b

$M_E$

$\pi/2$

0

t

FIG.3c

$M_1$

$\pi/2$

0

t

FIG. 4

FIG. 5